(19) Europäisches Patentamt
European Patent Office
Office européen des brevets

(11) **EP 3 794 316 B1**

(12) **EUROPÄISCHE PATENTSCHRIFT**

(45) Veröffentlichungstag und Bekanntmachung des Hinweises auf die Patenterteilung:
**01.06.2022  Patentblatt 2022/22**

(21) Anmeldenummer: **19719473.1**

(22) Anmeldetag: **17.04.2019**

(51) Internationale Patentklassifikation (IPC):
**G01C 21/36** *(2006.01)*    **G08G 1/14** *(2006.01)*

(52) Gemeinsame Patentklassifikation (CPC):
**G01C 21/3685; G08G 1/143; G08G 1/146; G08G 1/148**

(86) Internationale Anmeldenummer:
**PCT/EP2019/060029**

(87) Internationale Veröffentlichungsnummer:
**WO 2019/219325 (21.11.2019 Gazette 2019/47)**

(54) **VORRICHTUNG UND VERFAHREN ZUM AUSGEBEN VON NAVIGATIONSINFORMATION SOWIE FAHRZEUG**

APPARATUS AND METHOD FOR OUTPUTTING NAVIGATION INFORMATION AND VEHICLE

APPAREIL ET PROCÉDÉ DE SORTIE D'INFORMATIONS DE NAVIGATION ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2018   DE 102018207863**

(43) Veröffentlichungstag der Anmeldung:
**24.03.2021   Patentblatt 2021/12**

(73) Patentinhaber: **Bayerische Motoren Werke Aktiengesellschaft**
**80809 München (DE)**

(72) Erfinder:
• **BELZNER, Heidrun**
**82229 Seefeld (DE)**
• **KOTZOR, Daniel**
**82229 Seefeld (DE)**

(56) Entgegenhaltungen:
**EP-A1- 2 587 220        DE-A1-102015 111 218**
**DE-A1-102015 225 893    DE-U1-202016 003 680**
**US-A1- 2012 161 984**

**Beschreibung**

Die vorliegende Erfindung betrifft eine Vorrichtung und ein Verfahren zum Ausgeben von Navigationsinformation für ein Fahrzeug, insbesondere Kraftfahrzeug, sowie ein Fahrzeug mit einer solchen Vorrichtung.

Um den Fahrer eines Fahrzeugs bei der Routenplanung zu unterstützen, sind Navigationsgeräte bekannt, die in der Regel eine oder mehrere bezüglich der Reisezeit und/oder des Kraftstoffverbrauchs optimierte Routen von einem Aufenthaltsort des Fahrzeugs bis zu einem Zielort berechnen und entsprechende Navigationsinformation an den Fahrer ausgeben.

Üblicherweise kann der Fahrer sein Fahrzeug jedoch nicht direkt am Zielort abstellen, sondern muss, gegebenenfalls bereits vor dem Erreichen des Zielortes, nach einem Parkplatz für sein Fahrzeug suchen. Die Reisezeit bis zum Erreichen des Zielortes verlängert sich dabei für gewöhnlich um die für die Parkplatzsuche sowie den Fußmarsch von einem gefundenen Parkplatz bis zum Zielort benötigte Zeitdauer. Daher wurden Navigationsgeräte entwickelt, welche eine bezüglich Parkplatzoptionen optimierte Route berechnen. Dazu können beispielsweise empirisch ermittelte, etwa von einem Parkinformationsdienst bereitgestellte, Wahrscheinlichkeiten zum Auffinden eines Parkplatzes und/oder eine aktuelle, beispielsweise online gemeldete, Parkplatzverfügbarkeit in der Berechnung berücksichtigt werden.

Die Dokumente US2012/161984, EP2587220, DE202016003680U und DE102015225893 offenbaren Verfahren zum Optimieren einer Parkplatzsuche eines Fahrzeuges. Das Dokument DE102015111218 offenbart die Auswahl eines Stellplatzes in der Umgebung eines Ziels basierend auf mindestens einem Benutzerparameter und auf Daten, die aus historischen Stellplatzdaten abgeleitet werden, woraufhin eine Route zu dem ausgewählten Stellplatz bestimmt wird.

Es ist eine Aufgabe der vorliegenden Erfindung, die Navigation von einer gegenwärtigen Position des Fahrzeugs zu einer Zielposition zu verbessern, insbesondere bezüglich der insgesamt benötigten Zeit zum Erreichen des angesteuerten Ziels zu optimieren.

Diese Aufgabe wird gelöst durch eine Vorrichtung und ein Verfahren zum Ausgeben von Navigationsinformation für ein Fahrzeug, insbesondere Kraftfahrzeug, gemäß den unabhängigen Ansprüchen.

Eine erfindungsgemäße Vorrichtung zum Ausgeben von Navigationsinformation für ein Fahrzeug, insbesondere Kraftfahrzeug, weist wenigstens eine Eingangsschnittstelle auf, über welche Positionsdaten, welche Information bezüglich der gegenwärtigen Position des Fahrzeugs enthalten, Zieldaten, welche Information bezüglich der Position des vom Fahrzeug angesteuerten Ziels enthalten, und Parkdaten, welche Information bezüglich wenigstens zwei Parkplatzpositionen und der Verfügbarkeit von Parkplätzen an den wenigstens zwei Parkplatzpositionen enthalten, bereitstellbar sind. Eine Datenverarbeitungseinrichtung ist dazu eingerichtet, eine Reihenfolge, in der wenigstens ein Teil der wenigstens zwei Parkplatzpositionen anzufahren ist, auf Grundlage der bereitgestellten Positionsdaten, Zieldaten und Parkdaten derart zu ermitteln, dass die ermittelte Reihenfolge ein Optimierungskriterium erfüllt. Ferner ist die Datenverarbeitungseinrichtung dazu eingerichtet, für zumindest eine der Parkplatzpositionen zu prüfen, ob das Optimierungskriterium erfüllbar ist, indem an der zumindest einen Parkplatzposition gewartet wird oder an eine zeitlich vor der zumindest einen Parkplatzposition anzufahrende Parkplatzposition zurückgekehrt wird. Über wenigstens eine Ausgangsschnittstelle ist die ermittelte Reihenfolge als Navigationsinformation ausgebbar.

Ein erfindungsgemäßes Fahrzeug, insbesondere Kraftfahrzeug, weist eine erfindungsgemäße Vorrichtung zum Ausgeben von Navigationsinformation auf.

Beim erfindungsgemäßen Verfahren zum Ausgeben von Navigationsinformation für ein Fahrzeug, insbesondere Kraftfahrzeug, werden Positionsdaten, welche Information bezüglich der gegenwärtigen Position des Fahrzeugs enthalten, Zieldaten, welche Information bezüglich der Position des vom Fahrzeug angesteuerten Ziels enthalten; und Parkdaten, welche Information bezüglich wenigstens zwei Parkplatzpositionen und der Verfügbarkeit von Parkplätzen an den wenigstens zwei Parkplatzpositionen enthalten, bereitgestellt. Zudem wird eine Reihenfolge, in der wenigstens ein Teil der wenigstens zwei Parkplatzpositionen anzufahren ist, auf Grundlage der bereitgestellten Positionsdaten, Zieldaten und Parkdaten derart ermittelt, dass die ermittelte Reihenfolge ein Optimierungskriterium erfüllt. Dabei wird für zumindest eine der Parkplatzpositionen geprüft, ob das Optimierungskriterium erfüllt wird, indem an der zumindest einen Parkplatzposition gewartet wird oder an eine zeitlich vor der zumindest einen Parkplatzposition anzufahrenden Parkplatzpositionen zurückgekehrt wird. Die ermittelte Reihenfolge wird als Navigationsinformation ausgegeben.

Ein Aspekt der Erfindung basiert auf dem Ansatz, bei der Routenplanung zukünftige, sich gegebenenfalls im Verlauf der Zeit ändernde Parkplatzverfügbarkeiten an wenigstens zwei Parkplatzpositionen zu berücksichtigen. Dadurch wird es möglich, durch Warten an einer Parkplatzposition und/oder durch erneutes Anfahren einer bereits zuvor angefahrenen Parkplatzposition einen Parkplatz in einer kürzeren Zeit zu finden, als es durch konventionelles, lineares Anfahren einer Parkplatzposition nach der anderen möglich ist.

Um eine bezüglich der Reisezeit, d.h. von einer gegenwärtigen Position des Fahrzeugs bis zum Erreichen, gegebenenfalls teilweise zu Fuß, eines angesteuerten Ziels optimierte Route zu ermitteln, werden Positionsdaten des Fahrzeugs, Zieldaten des angesteuerten Ziels und Parkdaten im Bereich des angesteuerten Ziels liegender Parkplatzpositionen über wenigstens eine Eingangsschnittstelle bereitgestellt. Beispielsweise können über eine Schnittstelle von Satelliten ausgesendete Signale empfangen werden, um eine gegenwärtige Position des Fahrzeugs zu ermitteln. Zusätzlich kann über eine andere Schnittstelle, etwa eine Tastatur, ein Touchscreen und/oder eine Spracherkennungseinheit, eine dem angesteuerten Ziel entsprechende Adresse vom Fahrer des Fahrzeugs eingegeben werden. Die Parkdaten können beispielsweise über eine Luftschnittstelle, etwa eine Mobilfunkverbindung, empfangen oder aus einer Datenbank ausgelesen werden.

Mittels einer Datenverarbeitungseinrichtung kann eine Reihenfolge ermittelt werden, in der verschiedene Parkplatzpositionen anzufahren sind, um ein Optimierungskriterium zu erfüllen, z.B. einen freien Parkplatz mit einer vorgegebenen Wahrscheinlichkeit zu finden und gleichzeitig die zum Auffinden des freien Parkplatzes benötigte Zeit zu minimieren. Aus der ermittelten Reihenfolge kann dann eine Route berechnet werden, welche das Fahrzeug von seiner gegenwärtigen Position zu wenigstens einer Parkplatzposition und den Fahrer des Fahrzeugs von der Parkplatzposition, an der er einen Parkplatz gefunden hat, mit dem voraussichtlich geringsten Zeitaufwand zum angesteuerten Ziel führt. Die ermittelte Reihenfolge kann unter gewissen Umständen, beispielsweise wenn eine Parkplatzposition mit hoher Parkplatzverfügbarkeit in unmittelbarer Nähe des Ziels liegt, auch nur eine Parkplatzposition enthalten, an welcher das Fahrzeug warten soll, falls auf Anhieb kein Parkplatz frei sein sollte.

Dabei wird von der Datenverarbeitungseinrichtung, beispielsweise im Rahmen eines sog. branch-and-bound-Verfahrens, geprüft, ob das Optimierungskriterium erfüllbar, z.B. die Reisezeit weiter minimierbar, ist, indem eine oder mehrere der Parkplatzpositionen erstmalig angefahren wird bzw. werden und/oder an einer der Parkplatzpositionen gewartet wird, bis dort ein Parkplatz frei wird, und/oder wenigstens eine der Parkplatzpositionen mehrmalig angefahren wird. Ein Warten an einer der Parkplatzpositionen und/oder eine Rückkehr an eine bereits zuvor anzufahrende Parkplatzposition ist insbesondere dann vorteilhaft, wenn ein Straßenzug im Bereich dieser Parkplatzposition, insbesondere die Parkplatzposition selbst, stark ausgelastet ist, die Parkplatzposition aber eine hohe Verfügbarkeitsrate aufweist, d.h. Parkplätze an der Parkplatzposition in kurzen zeitlichen Intervallen frei werden.

Auf Grundlage der ermittelten, vorzugsweise bezüglich des Optimierungskriteriums optimierten, Reihenfolge erzeugt die Datenverarbeitungseinrichtung in bevorzugter Weise eine Navigationsinformation, die beispielsweise eine Wegbeschreibung von der gegenwärtigen Position des Fahrzeugs zu den Parkplatzpositionen gemäß der ermittelten Reihenfolge enthält. Die Navigationsinformation wird über wenigstens eine Ausgangsschnittstelle, beispielsweise einen Lautsprecher und/oder eine Anzeigeeinrichtung im Fahrzeug, an den Fahrer des Fahrzeugs ausgegeben, der anhand der Navigationsinformation das Fahrzeug bis zur ersten in der ermittelten Reihenfolge von Parkplatzpositionen und anschließend zu den weiteren Parkplatzpositionen gemäß der ermittelten Reihenfolge führen kann, bis er einen freien Parkplatz findet oder an einer Parkplatzposition auf einen freien Parkplatz wartet bzw. warten soll.

Dabei muss die Vorrichtung nicht zwingenderweise Teil des Fahrzeugs bzw. in das Fahrzeug integriert sein. Die Navigationsinformation kann während der Fahrt oder vorab, insbesondere auch durch ein portables Endgerät, etwa einem Smartphone, ausgegeben werden.

Insgesamt ermöglicht die Erfindung eine verbesserte Navigation von einer gegenwärtigen Position des Fahrzeugs zu einer Zielposition, insbesondere bezüglich der insgesamt benötigten Zeit zum Erreichen des angesteuerten Ziels. Dies erlaubt insbesondere eine Zeitersparnis für den Fahrer, eine Reduktion des Verkehrsaufkommens und/oder eine Reduktion von Emissionen.

In einer bevorzugten Ausführungsform ist die Datenverarbeitungseinrichtung dazu eingerichtet, die Prüfung, ob das Optimierungskriterium durch Warten an der zumindest einen Parkplatzposition erfüllbar ist, unter Berücksichtigung von Kosten zu ermitteln. Vorzugsweise ergeben sich die Kosten dabei aus einem ersten Verfügbarkeitsmodell, welches die zeitliche Entwicklung der Verfügbarkeit von Parkplätzen an der zumindest einen Parkplatzposition abbildet. Mittels des ersten Verfügbarkeitsmodells kann in bevorzugter Weise eine Wartezeit zuverlässig ermittelt werden, nach der mit einer vorgegebenen Wahrscheinlichkeit ein Parkplatz an der zumindest einen Parkplatzposition frei wird. Die für das Warten an der zumindest einen Parkposition entstehenden, insbesondere von der Wartezeit abhängigen, Kosten werden in bevorzugter Weise durch eine Kostenfunktion ermittelt, vorzugsweise in Abhängigkeit der Wartezeit, und bei der Ermittlung der Reihenfolge, in der zumindest ein Teil der wenigstens zwei Parkplatzpositionen anzufahren ist, berücksichtigt. Dadurch kann eine optimale Reihenfolge zuverlässig ermittelt werden.

In einer weiteren bevorzugten Ausführungsform setzt das erste Verfügbarkeitsmodell, das vorzugsweise auf einer Exponentialverteilung basiert, eine Verfügbarkeitsrate, gemäß der Parkplätze an einer Parkplatzposition verfügbar werden, mit einer Wartezeit an der zumindest einen Parkplatzposition, nach der an dieser Parkplatzposition ein Parkplatz frei wird, in Beziehung. Dabei wird vorzugsweise auch die Anzahl der Parkplätze an der entsprechenden Parkplatzposition berücksichtigt. Dies erlaubt eine robuste Abschätzung der benötigten Wartezeit und damit auch der durch das Warten verursachten Kosten.

Alternativ kann das erste Verfügbarkeitsmodell aber auch auf einer anderen Funktion basieren.

Die Verfügbarkeitsrate, welche beispielsweise durch die Parkdaten verfügbar gemacht sein kann, hängt vorzugsweise von einer mittleren Parkzeit von Fahrzeugen auf der entsprechenden Parkplatzposition ab. Die mittlere Parkzeit und damit auch die Verfügbarkeitsrate kann leicht, beispielsweise empirisch, ermittelt und von einem Parkinformationsdienst bereitgestellt werden.

In einer weiteren bevorzugten Ausführungsform ist die Datenverarbeitungseinrichtung dazu eingerichtet, die sich aus dem ersten Verfügbarkeitsmodell ergebenden Kosten durch Vorgeben einer Wahrscheinlichkeit, mit der durch Warten an der zumindest einen Parkplatzposition ein Parkplatz verfügbar wird, zu beeinflussen. Beispielsweise kann vorgegeben werden, dass durch das Warten an der zumindest einen Parkplatzposition mit einer Wahrscheinlichkeit von 90 % oder höher ein Parkplatz verfügbar sein soll. In Abhängigkeit der Verfügbarkeitsrate, insbesondere wenn andere Fahrzeuge lange auf den Parkplätzen parken und daher nur selten Parkplätze frei werden, muss dazu lange gewartet werden, wodurch hohe Kosten entstehen. Mithilfe des ersten Verfügbarkeitsmodells lässt sich die dazu notwendige Wartezeit, und damit auch die damit verbundenen Kosten, insbesondere unter Berücksichtigung einer von der vorgegebenen Wahrscheinlichkeit abhängigen Kostenfunktion, zuverlässig berechnen.

In einer weiteren bevorzugten Ausführungsform ist die Datenverarbeitungseinrichtung dazu eingerichtet, die Prüfung, ob das Optimierungskriterium durch Rückkehr an eine zeitlich vor der zumindest einen Parkplatzposition anzufahrende Parkplatzposition erfüllbar ist, unter Berücksichtigung einer bedingten Verfügbarkeit von Parkplätzen an der zeitlich vor der zumindest einen Parkplatzposition anzufahrenden Parkplatzposition zu ermitteln. Die bedingten Verfügbarkeit ergibt sich dabei aus einem zweiten Verfügbarkeitsmodell, welches die zeitliche Entwicklung der Verfügbarkeit von Parkplätzen an den zeitlich vor der zumindest einen Parkplatzposition anzufahrenden Parkplatzpositionen abbildet. Das zweite Verfügbarkeitsmodell ist vorzugsweise derart ausgebildet, dass die abgebildete bedingte Verfügbarkeit von Parkplätzen dabei insbesondere davon abhängt, ob und/oder zu welchem Zeitpunkt die erneut anzufahrende Parkplatzposition zuvor bereits angefahren wurde, insbesondere wie viel Zeit zwischen dem vorigen und dem erneuten Anfahren vergangen ist. Alternativ kann die abgebildete bedingte Verfügbarkeit von Parkplätzen jedoch auch unabhängig von der Zeitspanne sein, die zwischen dem vorherigen und dem erneuten Anfahren der Parkplatzposition vergangen ist. Mithilfe des zweiten Verfügbarkeitsmodells kann die optimale Reihenfolge, in der zumindest ein Teil der wenigstens zwei Parkplatzposition anzufahren ist, zuverlässig und effizient ermittelt werden.

Vorzugsweise liefert das zweite Verfügbarkeitsmodell eine bedingte Verfügbarkeit, die einer bedingten Wahrscheinlichkeit entspricht, mit der ein freier Parkplatz bei einem erneuten Anfahren der Parkplatzposition vorgefunden wird. Diese bedingte Wahrscheinlichkeit wird in bevorzugter Weise bei der Prüfung, ob das Optimierungskriterium durch eine Rückkehr an die bereits zuvor anzufahrende Parkplatzposition erfüllbar ist, berücksichtigt. Insbesondere kann unter Berücksichtigung der bedingten Verfügbarkeit geprüft werden, ob durch das erneute Anfahren der zuvor bereits anzufahrenden Parkplatzposition ein Parkplatz mit einer bedingten Wahrscheinlichkeit verfügbar wird, die gleich oder größer einer vorgegebenen Wahrscheinlichkeit, mit der ein Parkplatz gefunden werden soll, ist.

In einer weiteren bevorzugten Ausführungsform setzt das zweite Verfügbarkeitsmodell, welches vorzugsweise auf einer Markow-Kette basiert, eine Parkrate, gemäß der Parkplätze an einer Parkplatzposition belegt werden, mit einer Verfügbarkeitsrate, gemäß der Parkplätze an einer Parkplatzposition verfügbar werden, in Beziehung. Das zweite Verfügbarkeitsmodell kann vorteilhaft als Matrix-Differenzialgleichung formuliert werden, um die zeitliche Entwicklung von freien Parkplätzen an der erneut anzufahrenden Parkplatzposition abzubilden. Diese Matrix-Differenzialgleichung kann beispielsweise durch ein Näherungsverfahren gelöst werden, um eine Wahrscheinlichkeit zu erhalten, mit der beim erneuten Anfahren der Parkplatzposition zu einem späteren Zeitpunkt ein freier Parkplatz verfügbar ist. Damit kann die optimale Reihenfolge, in der zumindest ein Teil der wenigstens bei Parkplatzposition anzufahren ist, besonders zuverlässig und effizient ermittelt werden.

Weitere Merkmale, Vorteile und Anwendungsmöglichkeiten der Erfindung ergeben sich aus der nachfolgenden Beschreibung im Zusammenhang mit den Figuren, in denen durchgängig dieselben Bezugszeichen für dieselben oder einander entsprechende Elemente der Erfindung verwendet werden. Es zeigen wenigstens teilweise schematisch:

Fig. 1    ein Beispiel einer Vorrichtung zum Ausgeben von Navigationsinformation;

Fig. 2    ein Beispiel einer ermittelten Reihenfolge, in der Parkplatzposition anzufahren sind; und

Fig. 3    ein Beispiel für das Ermitteln einer Reihenfolge, in der Parkplatzpositionen anzufahren sind.

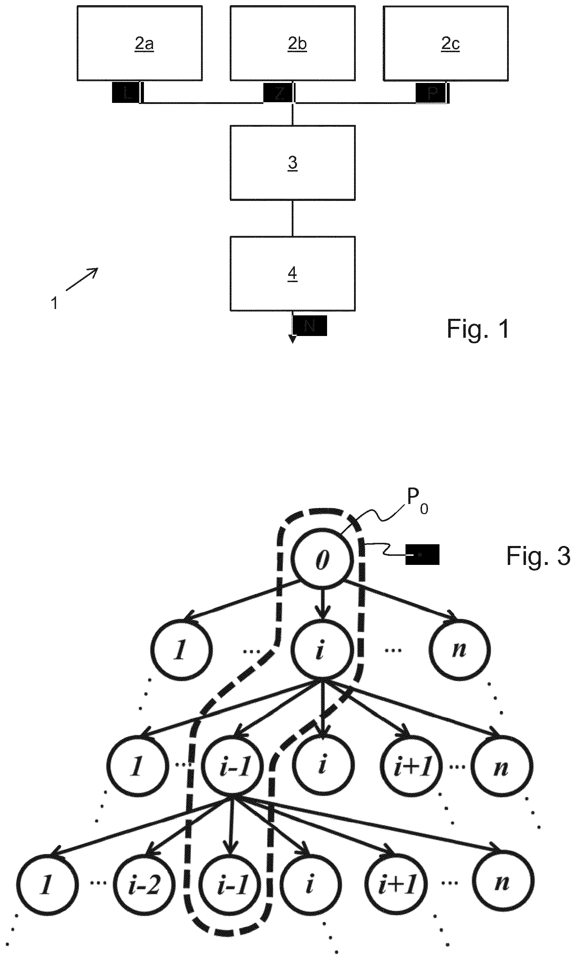

Figur 1 zeigt ein Beispiel einer Vorrichtung 1 zum Ausgeben von Navigationsinformation N für ein Fahrzeug mit drei Eingangsschnittstellen 2a, 2b, 2c, einer Datenverarbeitungseinrichtung 3 und einer Ausgabeschnittstelle 4.

Über eine erste Eingangsschnittstelle 2a können Positionsdaten L, welche Information bezüglich der gegenwärtigen Position des Fahrzeugs enthalten, bereitgestellt werden. Die erste Eingangsschnittstelle 2a kann zu diesem Zweck beispielsweise eine Datenverbindung mit mehreren Satelliten aufbauen, um anhand von über diese Datenverbindung empfangenen Signalen die gegenwärtige Position des Fahrzeugs zu ermitteln.

Über eine zweite Eingangsschnittstelle 2b können Zieldaten Z, welche Information bezüglich der Position des vom Fahrzeug angesteuerten Ziels enthalten, bereitgestellt werden. Die zweite Eingangsschnittstelle 2b kann zu diesem Zweck beispielsweise eine Eingabe des Fahrers des Fahrzeugs erfassen, etwa mittels einer Tastatur, einem Touchscreen oder einem Mikrofon, aus welcher der Zielort, insbesondere eine Adresse, hervorgeht.

Über eine dritte Eingangsschnittstelle 2c können Parkdaten P, welche Information bezüglich wenigstens zwei Parkplatzpositionen und der Verfügbarkeit von Parkplätzen an den wenigstens bei Parkplatzpositionen enthalten, bereitstellen. Die dritte Eingangsschnittstelle 2c kann zu diesem Zweck beispielsweise eine Luftschnittstelle aufweisen und dazu eingerichtet sein, eine Datenverbindung mit einem Parkinformationsdienst, etwa über eine drahtlose Internetverbindung, herzustellen, wobei die Parkdaten P in bevorzugter Weise von einem Server abgerufen werden können. Alternativ oder zusätzlich kann die dritte Eingangsschnittstelle 2c eine Datenbank aufweisen oder mit einer Datenbank verbindbar sein, welche die Parkdaten P enthält.

Die Datenverarbeitungseinrichtung 3 ist dazu eingerichtet, anhand der Positionsdaten L, der Zieldaten Z und der Parkdaten P ein Reihenfolge zu ermitteln, in der wenigstens zwei Parkplatzpositionen vom Fahrzeug auf der Suche nach einem Parkplatz im Bereich des angesteuerten Ziels angefahren werden sollen, vorzugsweise um mit einer, beispielsweise werksseitig oder vom Fahrer, etwa über die zweite Eingangsschnittstelle 2b, vorgegebenen Wahrscheinlichkeit an einer dieser Parkplatzpositionen einen Parkplatz finden. Die Reihenfolge wird dabei in der Weise ermittelt, dass ein Optimierungskriterium erfüllt ist, beispielsweise die Gesamtreisezeit minimal ist, welche die benötigte Zeit für die Fahrt von der gegenwärtigen Position des Fahrzeugs bis zum Auffinden eines Parkplatzes und einen Fußmarsch von der Parkplatzposition, an welcher ein Parkplatz gefunden wurde, bis zum angesteuerten Ziel abbildet.

Die Datenverarbeitungseinrichtung 3 ist dabei in bevorzugter Weise dazu eingerichtet, verschiedene Vorgehensweisen zur Parkplatzsuche anzuwenden, insbesondere miteinander zu kombinieren. Eine erste Vorgehensweise ist beispielsweise das Anfahren mehrerer Parkplatzpositionen hintereinander, vorzugsweise in Abhängigkeit von einer zwischen den Parkplatzpositionen zurückzulegenden Fahrtstrecke, der jeweiligen Entfernung zwischen jeder der Parkplatzpositionen und dem angesteuerten Ziel und/oder untereinander und/oder der Verfügbarkeit von Parkplätzen an den Parkplatzpositionen, d.h. der Wahrscheinlichkeit, beim Anfahren der Parkplatzpositionen einen freien Parkplatz zu finden.

Eine zweite Vorgehensweise ist beispielsweise das Warten an einer anzufahrenden Parkplatzposition, bis an dieser Parkplatzposition $P_i$ ein Parkplatz frei wird. Eine dritte Vorgehensweise ist beispielsweise das mehrmalige Anfahren einer oder mehrerer Parkplatzpositionen, d.h. das Zurückkehren an eine bereits zuvor anzufahrende Parkplatzposition. Bei der zweiten und dritten Vorgehensweise wird vorzugsweise eine zukünftige Belegung der Parkplätze an den Parkplatzpositionen $P_i$ berücksichtigt. Die zukünftige Parkplatzbelegung, insbesondere die zeitliche Entwicklung der Parkplatzbelegung, kann etwa mittels eines Verfügbarkeitsmodells modelliert werden, insbesondere unter Berücksichtigung einer Verfügbarkeitsrate, mit der Parkplätze an der entsprechenden Parkplatzposition $P_i$ frei werden. Die Verfügbarkeitsrate kann beispielsweise empirisch ermittelt oder abgeschätzt werden oder worden sein.

Um die bezüglich der Gesamtreisezeit des Fahrers optimierte Reihenfolge zu finden, kann die Datenverarbeitungseinrichtung 3 beispielsweise das sog. branch-and-bound-Verfahren anwenden. Dabei wird vorzugsweise ein Strategiebaum entwickelt, dessen Äste die verschiedenen möglichen Reihenfolgen abbilden. Die Entwicklung eines Astes kann abgebrochen werden, d.h. die entsprechende Reihenfolge verworfen werden, wenn das Optimierungskriterium in diesem Ast nicht erfüllbar ist, d.h. wenn beispielsweise in einem anderen Ast des Strategiebaums ein Parkplatz in kürzerer Zeit und/oder in geringerem Abstand zum angesteuerten Ziel mit der gleichen Wahrscheinlichkeit gefunden werden kann. Alternativ oder zusätzlich kann die Entwicklung eines Astes abgebrochen werden, wenn die minimale erwartete Reisezeit nicht erreicht werden kann.

Bei der Ermittlung der optimalen Reihenfolge berücksichtigt die Datenverarbeitungseinrichtung 3 vorzugsweise Kosten, die durch die Fahrten zwischen den verschiedenen Parkplatzpositionen und/oder durch Warten an einer Parkplatzposition entstehen. Die Kosten bilden dabei in bevorzugter Weise die benötigte Zeit ab, die mit dem Durchführen einer Strategie verbunden ist, und können durch entsprechende Kostenfunktionen ermittelt werden.

Die so ermittelte Reihenfolge kann über die Ausgangsschnittstelle 4, beispielsweise über eine Anzeigeeinrichtung und/oder einen Lautsprecher als Navigationsinformation N ausgegeben werden.

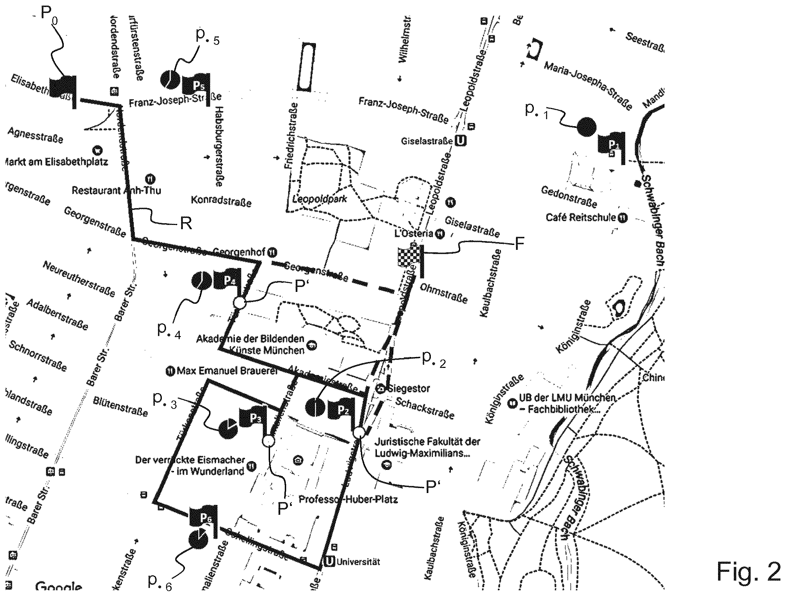

Figur 2 zeigt ein Beispiel einer ermittelten Reihenfolge, in der Parkplatzpositionen $P_i$ mit i = 1...6 anzufahren sind. Die Parkplatzpositionen $P_i$ sind zusammen mit einer gegenwärtigen Position $P_0$ eines Fahrzeugs und einer Position F eines anzusteuernden Ziels auf einer Karte eingezeichnet. Jeder Parkplatzposition $P_i$ ist eine als Tortendiagramm dargestellte Verfügbarkeit $p_{\pi i}$ mit i = 1...6 von Parkplätzen zugeordnet, welche mit einer Wahrscheinlichkeit, an der entsprechenden Parkplatzposition $P_i$ beim, insbesondere erstmaligen, Anfahren einen freien Parkplatz zu finden, korrespondiert.

Im gezeigten Beispiel wird angenommen, dass der Fahrer des Fahrzeugs von der Position $P_0$ zum angesteuerten Ziel F gelangen will. Offensichtlich benötigt der Fahrer zunächst einen Parkplatz und muss dann die letzte Strecke zu Fuß zurücklegen. An jeder der Parkplatzpositionen $P_i$ hat er die Möglichkeit, zu warten, bis ein Parkplatz verfügbar wird, oder eine andere Parkplatzposition $P_i$ auszuprobieren. Das Anfahren kann wiederholt werden, bis der Fahrer schließlich einen Parkplatz findet oder an einer Parkplatzposition $P_i$ auf einen freien Parkplatz wartet.

Rein beispielhaft ist eine Route R als durchgezogene breite Linie gezeigt, die einer für den Fahrer optimalen Strategie, d.h. dem Abfahren der Parkplatzpositionen $P_i$ in einer optimalen Reihenfolge, zum Erreichen des Ziels F bei minimalen Kosten, insbesondere in kürzester Zeit, entspricht. Dabei werden vorzugsweise nur Routen R bzw. Reihenfolgen akzeptiert, die eine Erfolgsrate von 90 % oder höher aufweisen.

Parkversuche P' sind durch leere Kreise angedeutet. Im vorliegenden Fall werden nicht alle Parkplatzpositionen $P_i$ angefahren. Der Fahrer versucht zunächst, an Parkplatzposition $P_4$ einen Parkplatz zu finden, und fährt weiter zu Parkplatzposition $P_2$, falls er nicht erfolgreich ist. Er fährt dann bei Parkplatzposition $P_3$ fort, einen Parkplatz zu suchen, falls er abermals nicht erfolgreich ist. Bei Erreichen der Parkplatzposition $P_3$ ist die, insbesondere kumulative, Wahrscheinlichkeit, einen Parkplatz gefunden zu haben, größer als 90 %. Sollte der Fahrer bis zur Parkplatzposition $P_3$ dennoch keinen Parkplatz gefunden haben, kann er an Parkplatzposition $P_3$ warten, bis dort ein Parkplatz frei wird. Der im Falle eines Erfolgs zurückzulegende Fußweg ist als gestrichelte schwarze Linie eingezeichnet.

Figur 3 zeigt ein Beispiel für das Ermitteln einer Reihenfolge, in der Parkplatzpositionen $P_i$ mit i = 1...n mit einem Fahrzeug anzufahren sind. Die möglichen Parkplatzpositionen $P_i$ sind durch nummerierte, horizontal nebeneinander angeordnete Kreise angedeutet. Von jeder der Parkplatzposition $P_i$ aus kann entweder eine andere Parkplatzposition $P_i$ angefahren werden, oder es kann an der entsprechenden Parkplatzposition $P_i$ gewartet werden, bis ein Parkplatz frei wird. Diese Optionen sind durch Pfeile angedeutet, so dass sich ausgehend von einer gegenwärtigen Position $P_0$ des Fahrzeugs ein Strategiebaum ergibt, dessen Äste jeweils eine Reihenfolge anzufahrender Parkplatzpositionen $P_i$ bilden. Eine dieser Reihenfolgen ist durch die schwarze gestrichelte Linie angedeutet. Gemäß dieser Reihenfolge soll das Fahrzeug zunächst die Position $P_i$ anfahren. Falls dort kein freier Parkplatz verfügbar ist, soll die Parkplatzposition $P_{i-1}$ angefahren werden. Wenn dort auf Anhieb kein freier Parkplatz verfügbar ist, soll so lange gewartet werden, bis ein Parkplatz frei wird.

Jede mögliche Reihenfolge repräsentiert eine Strategie $\pi$ zum Auffinden eines Parkplatzes, die mit einer kumulativen Wahrscheinlichkeit, bei den in der Reihenfolge enthaltenen Parkplatzposition $P_i$ einen Parkplatz zu finden, erfolgreich ist. Die Wahrscheinlichkeit, nach Anfahren j verschiedener Parkplatzpositionen $P_i$ erfolgreich zu sein, ist

$$p_\pi^j = \left(1 - p_{\pi_1}\right)\ldots\left(1 - p_{\pi_{j-1}}\right)p_{\pi_j},$$

mit $p_{\pi_i}$ als der Verfügbarkeit eines Parkplatzes an der Parkplatzposition $P_i$. Die Erfolgsrate einer bestimmten Strategie $\pi$ mit m Versuchen, an verschiedenen Parkplatzpositionen $P_i$ einen Parkplatz zu finden, ergibt sich daher zu

$$p_\pi = \sum_{j=1}^{m} p_\pi^j.$$

Da sich die Erfolgsrate mit jedem zusätzlichen Versuch, an einer weiteren Parkplatzposition $P_i$ einen Parkplatz zu finden, erhöht, ist der Strategiebaum endlich, wobei jeder Ast des Strategiebaums endet, wenn die mit ihm korrespondierende Erfolgsrate $p_\pi$ größer ist als eine vorgegebene Wahrscheinlichkeit $p_{acc}$, einen Parkplatz zu finden.

Die optimale Reihenfolge wird unter Berücksichtigung von Kosten ermittelt, die durch Verfolgen der unterschiedlichen Strategien entstehen und vorzugsweise mit der benötigten Gesamtzeit, bis ein Parkplatz gefunden und von dort aus das angesteuerte Ziel zu Fuß erreicht ist, korrespondieren. Zum Ermitteln von Kosten, die durch Fahrten mit dem Fahrzeug oder einen Fußmarsch entstehen, beispielsweise von der gegenwärtigen Position $P_0$ des Fahrzeugs an eine Parkplatzposition $P_i$ oder von einer Parkplatzposition $P_i$ zu einer Parkplatzposition $P_j$ oder von einer Parkplatzposition $P_j$ zum angesteuerten Ziel, sind aus dem Stand der Technik Routenberechnungsverfahren bekannt, etwa Nokia HERE, Grashopper oder Google routing.

Dabei können Kostenfunktionen angenommen werden, welche die Kosten der vorstehend genannten Fahrt- oder Fußmarschzeiten quantifizieren, gegebenenfalls auch abhängig von einem Zustand des Fahrzeugs, beispielsweise einer Ausrichtung des Fahrzeugs auf der Straße.

Zum Berechnen der Kosten einer Strategie $\pi$, gemäß der an einer Parkplatzposition $P_i$ gewartet werden soll, kann ein erstes Verfügbarkeitsmodell berücksichtigt werden, welches in bevorzugter Weise auf einer Exponentialverteilung basiert. In das erste Verfügbarkeitsmodell geht vorzugsweise eine Verfügbarkeitsrate

$$\mu = \frac{1}{mttp}$$

ein, in der *mttp* (mean time to park) die mittlere Zeit angibt, mit der Fahrzeuge an der entsprechenden Parkplatzposition $P_i$ parken. Die Verfügbarkeitsrate entspricht daher einer Rate, mit der Parkplätze an der Parkplatzposition $P_i$ frei werden. Dann ist

$$p = 1 - e^{-tn\mu}$$

die Wahrscheinlichkeit, dass bei n belegten Parkplätzen nach der Zeit t ein Parkplatz frei wird. Entsprechend ist die Wartezeit, bis ein Parkplatz mit einer Wahrscheinlichkeit größer als p frei wird,

$$t = \frac{-\log(1 - p)}{n\mu}.$$

Wartet ein Fahrer beispielsweise an einer Parkplatzposition $P_i$ mit n = 10 belegten Parkplätzen, auf denen gewöhnlich für etwa t = 30 min geparkt wird, muss der Fahrer etwa t = 13,82 min warten, um mit 99-prozentiger Wahrscheinlichkeit einen freien Parkplatz zu finden. Die Kosten für diese Wartezeit können beispielsweise durch eine Kostenfunktion $c_{wait}(p,j)$ mit $1 \leq j \leq n$ angegeben werden, wobei $c_{wait}$ die Kosten quantifiziert, an der Parkplatzposition $P_j$ zu warten, bis ein Parkplatz mit einer Wahrscheinlichkeit größer als p frei wird.

In manchen Fällen kann es für den Fahrer vielversprechend sein, eine bereits zuvor angefahrene Parkplatzposition $P_j$ erneut anzufahren. Während die Kosten, von einer Parkplatzposition $P_i$ aus die Parkplatzposition $P_j$ erneut anzufahren, zeitunabhängig durch eine Kostenfunktion $c_d(i,j,s)$ gegeben sind, wobei s einen Zustand des Fahrzeugs charakterisiert, ändert sich die Verfügbarkeit von freien Parkplätzen an der Parkplatzposition $P_j$ beim erneuten Anfahren. Diese Verfügbarkeit wird deshalb auch als bedingte Verfügbarkeit bezeichnet. Die zeitabhängige bzw. bedingte Verfügbarkeit korrespondiert mit einer Wahrscheinlichkeit, beim erneuten Anfahren einen freien Parkplatz zu finden, nachdem beim vorigen Anfahren kein freier Parkplatz gefunden wurde, und kann auf Grundlage eines zweiten Verfügbarkeitsmodells ermittelt werden.

Ein statistisches Modell, mithilfe dessen die zeitabhängige bzw. bedingte Verfügbarkeit abgeschätzt werden kann, ist der Geburts- und Sterbeprozess, d.h. ein homogener Markow-Prozess. In dieses Modell gehen vorzugsweise zwei Parameter ein: $\lambda$ ist die Anfragerate und charakterisiert die Zahl der Fahrzeug, die pro Zeiteinheit, etwa pro Stunde, auf dem Parkplatz parken wollen, und $\mu$ ist die Verfügbarkeitsrate. Vorzugsweise wird die Wahrscheinlichkeit, dass ein neues Fahrzeug am Parkplatz ankommt und dass zumindest ein Fahrzeug den Parkplatz verlässt, jeweils durch eine Exponentialverteilung modelliert.

Während die Anfragerate unabhängig von der Anzahl an Fahrzeugen ist, die bereits auf Parkplätzen an der Parkplatzposition $P_j$ parken, erhöht sich die Verfügbarkeitsrate, je mehr Parkplätze belegt sind. Zudem sind die Anfragerate und die Verfügbarkeitsrate vorzugsweise zeitabhängig, z.B. von der Tages- oder gar Jahreszeit. Mit $\lambda(t)$ und $\mu(t)$ als Funktionen der Zeit können die Wahrscheinlichkeiten für verschiedene Belegungszustände an den Parkplatzposition $P_i$ durch die folgende Matrix-Differenzialgleichung beschrieben werden:

$$\begin{bmatrix} \dot{P_0} \\ \vdots \\ \dot{P_i} \\ \vdots \\ \dot{P_n} \end{bmatrix} = \begin{bmatrix} -\lambda & \mu & & & \\ & \ddots & & & \\ & \lambda & -(\lambda + i\mu) & (i+1)\mu & \\ & & & \ddots & \\ & & & \lambda & -n\mu \end{bmatrix} \begin{bmatrix} P_0 \\ \vdots \\ P_i \\ \vdots \\ P_n \end{bmatrix}.$$

Dabei enthält die Diagonale der Matrix die Einträge $-\lambda,..., -(\lambda + i\mu),..., -n\mu$. Die obere Sekundärdiagonale der Matrix enthält in der oberen Hälfte der Matrix die Einträge $\mu, ..., (i+1)\mu$, und die untere Sekundärdiagonale der Matrix enthält in der unteren Hälfte der Matrix die Einträge $\lambda$. Alle anderen Einträge sind Null. Für einen Startvektor p beschreibt die Gleichung den Zustand von Parkplätzen bzw. deren Verfügbarkeit durch p(t) im Verlauf der Zeit, wenn $\lambda(t)$ und $\mu(t)$ bekannt sind. Mit der Matrix $A$ kann die Gleichung geschrieben werden als $\dot{p} = Ap$ mit $p = [P_0 ... P_n]^T$.

Unter der Annahme, dass $A = const.$ in einem interessierenden Zeitintervall, beispielsweise während das Fahrzeug von einer Parkplatzposition $P_i$ zu einer anderen, bereits zuvor angefahrenen Parkplatzposition $P_j$ fährt, kann die Differenzialgleichung mithilfe einer Matrix-Exponentialfunktion gelöst werden. Beispielsweise kann der Ansatz p(t) = $e^C p_0$ mit C = A $\cdot$ t gewählt werden, wobei $e^C = \sum_{i=0}^\infty \frac{C^i}{i!}$. Die Matrix-Exponentialfunktion ist sehr effizient erhältlich, beispielsweise durch Anwenden der Pade-Näherung.

Die Rückkehr an eine bereits zuvor angefahrene Parkplatzposition $P_j$ nach einer Zeit t liefert entsprechend eine Wahrscheinlichkeit zum Auffinden eines freien Parkplatzes

$$p(t) = e^{A \cdot t} p_0$$

mit $p_0 = (0 \dots 0 \ 1)^T$. Diese Wahrscheinlichkeit, welche mit einer zeitabhängigen bzw. bedingten Verfügbarkeit korrespondiert, kann genutzt werden, um die bezüglich der Gesamtreisezeit optimale Reihenfolge zu ermitteln, in der zumindest ein Teil der wenigstens zwei verschiedenen Parkplatzpositionen $P_i$ anzufahren ist.

Bezugszeichenliste

| | |
|---|---|
| 1 | Vorrichtung zum Ausgeben von Navigationsinformation |
| 2a, 2b, 2c | Eingangsschnittstelle |
| 3 | Datenverarbeitungseinrichtung |
| 4 | Ausgangsschnittstelle |

| | |
|---|---|
| N | Navigationsinformation |
| L | Positionsdaten |
| Z | Zieldaten |
| P | Parkdaten |

| | |
|---|---|
| $P_{i,j}$ | Parkplatzposition |
| $p_{\pi i}$ | Verfügbarkeit |
| $P_0$ | Fahrzeugposition |
| F | Zielposition |
| R | Route |
| P' | Parkversuch |
| $\pi$ | Strategie |

**Patentansprüche**

1. Vorrichtung (1) zum Ausgeben von Navigationsinformation (N) für ein Fahrzeug mit

    - wenigstens einer Eingangsschnittstelle (2a, 2b, 2c), über welche Positionsdaten (L), welche Information bezüglich der gegenwärtigen Position ($P_0$) des Fahrzeugs enthalten, Zieldaten (Z), welche Information bezüglich der Position (F) des vom Fahrzeug angesteuerten Ziels enthalten, und Parkdaten (P), welche Information bezüglich wenigstens zwei Parkplatzpositionen ($P_i$) und der Verfügbarkeit ($p_{\pi i}$) von Parkplätzen an den wenigstens zwei Parkplatzpositionen ($P_i$) enthalten, bereitstellbar sind,
    - einer Datenverarbeitungseinrichtung (3), welche dazu eingerichtet ist, eine Reihenfolge, in der wenigstens ein Teil der wenigstens zwei Parkplatzpositionen ($P_i$) anzufahren ist, auf Grundlage der bereitgestellten Positionsdaten (L), Zieldaten (Z) und Parkdaten (P) derart zu ermitteln, dass die ermittelte Reihenfolge ein Optimierungskriterium erfüllt,
    **dadurch gekennzeichnet, dass**
    die Datenverarbeitungseinrichtung dazu eingerichtet ist, bei der Ermittlung der Reihenfolge für zumindest eine der Parkplatzpositionen ($P_i$) zu prüfen, ob das Optimierungskriterium erfüllbar ist, indem an der zumindest einen Parkplatzposition ($P_i$) gewartet wird oder an eine zeitlich vor der zumindest einen Parkplatzposition ($P_i$) anzufahrende Parkplatzposition ($P_i$) zurückgekehrt wird, und
    - wenigstens einer Ausgangsschnittstelle (4), über welche die ermittelte Reihenfolge als Navigationsinformation (N) ausgebbar ist.

2. Vorrichtung (1) nach Anspruch 1, wobei die Datenverarbeitungseinrichtung (3) dazu eingerichtet ist, die Prüfung, ob das Optimierungskriterium durch Warten an der zumindest einen Parkplatzposition ($P_i$) erfüllbar ist, unter Berücksichtigung von Kosten zu ermitteln, die sich aus einem ersten Verfügbarkeitsmodell, welches die zeitliche Entwicklung der Verfügbarkeit ($p_{\pi i}$) von Parkplätzen an der zumindest einen Parkplatzposition ($P_i$) abbildet, ergeben.

3. Vorrichtung nach Anspruch 2, wobei das erste Verfügbarkeitsmodell, welches vorzugsweise auf einer Exponentialverteilung basiert, eine Verfügbarkeitsrate ($\mu$), gemäß der Parkplätze an einer Parkplatzposition ($P_i$) verfügbar

werden, mit einer Wartezeit an der zumindest einen Parkplatzposition ($P_i$) in Beziehung setzt.

4. Vorrichtung (1) nach Anspruch 2 oder 3, wobei die Datenverarbeitungseinrichtung (3) dazu eingerichtet ist, die sich aus dem ersten Verfügbarkeitsmodell ergebenden Kosten durch Vorgeben einer Wahrscheinlichkeit ($p_{acc}$), mit der durch Warten an der zumindest einen Parkplatzposition ($P_i$) ein Parkplatz verfügbar wird, zu beeinflussen.

5. Vorrichtung (1) nach einem der vorangehenden Ansprüche, wobei die Datenverarbeitungseinrichtung (3) dazu eingerichtet ist, die Prüfung, ob das Optimierungskriterium durch Rückkehr an eine zeitlich vor der zumindest einen Parkplatzposition ($P_i$) anzufahrende Parkplatzposition ($P_i$) erfüllbar ist, unter Berücksichtigung einer bedingten Verfügbarkeit von Parkplätzen an der zeitlich vor der zumindest einen Parkplatzposition ($P_i$) anzufahrenden Parkplatzposition ($P_i$) zu ermitteln, die sich aus einem zweiten Verfügbarkeitsmodell, welches die zeitliche Entwicklung der Verfügbarkeit ($p_{\pi i}$) von Parkplätzen an den zeitlich vor der zumindest einen Parkplatzposition ($P_i$) anzufahrenden Parkplatzpositionen ($P_i$) abbildet, ergibt.

6. Vorrichtung (1) nach Anspruch 5, wobei das zweite Verfügbarkeitsmodell, das vorzugsweise auf einer Markow-Kette basiert, eine Parkrate ($\lambda$), gemäß der Parkplätze an einer Parkplatzposition belegt werden, mit einer Verfügbarkeitsrate ($\mu$), gemäß der Parkplätze an einer Parkplatzposition ($P_i$) verfügbar werden, in Beziehung setzt.

7. Fahrzeug, insbesondere Kraftfahrzeug, mit einer Vorrichtung (1) nach einem der vorangehenden Ansprüche.

8. Verfahren zur Navigation eines Fahrzeugs mit den Schritten:

   - Bereitstellen von Positionsdaten (L), welche Information bezüglich der gegenwärtigen Position ($P_0$) des Fahrzeugs enthalten;
   - Bereitstellen von Zieldaten (Z), welche Information bezüglich der Position (F) des vom Fahrzeug angesteuerten Ziels enthalten;
   - Bereitstellen von Parkdaten (P), welche Information bezüglich wenigstens zwei Parkplatzpositionen ($P_i$) und der Verfügbarkeit von Parkplätzen an den wenigstens zwei Parkplatzpositionen ($P_i$) enthalten;
   - Ermitteln einer Reihenfolge, in der wenigstens ein Teil der wenigstens zwei Parkplatzpositionen ($P_i$) anzufahren ist, auf Grundlage der bereitgestellten Positionsdaten (L), Zieldaten (Z) und Parkdaten (P) derart, dass die ermittelte Reihenfolge ein Optimierungskriterium erfüllt,
   **dadurch gekennzeichnet, dass**
   für zumindest eine der Parkplatzpositionen ($P_i$) geprüft wird, ob das Optimierungskriterium erfüllt wird, indem an der zumindest einen Parkplatzposition ($P_i$) gewartet wird oder an eine zeitlich vor der zumindest einen Parkplatzposition ($P_i$) anzufahrenden Parkplatzpositionen ($P_i$) zurückgekehrt wird; und
   - Ausgeben der ermittelten Reihenfolge als Navigationsinformation (N).

**Claims**

1. Device (1) for outputting navigation information (N) for a vehicle having

   - at least one input interface (2a, 2b, 2c), via which position data (L), which contain information with respect to the present position ($P_0$) of the vehicle, destination data (Z), which contain information with respect to the position (F) of the destination being travelled towards by the vehicle, and parking data (P), which contain information with respect to at least two parking space positions ($P_i$) and the availability ($p_{\pi i}$) of parking spaces at the at least two parking space positions (Pi), can be provided,
   - a data processing unit (3), which is designed to ascertain a sequence in which at least a part of the at least two parking space positions ($P_i$) is to be approached on the basis of the provided position data (L), destination data (Z), and parking data (P) in such a way that the ascertained sequence meets an optimization criterion, **characterized in that** the data processing unit is designed, when ascertaining the sequence, to check for at least one of the parking space positions ($P_i$) whether the optimization criterion can be met by waiting at the at least one parking space position ($P_i$) or returning to a parking space position ($P_i$) to be approached chronologically before the at least one parking space position (Pi), and
   - at least one output interface (4), via which the ascertained sequence can be output as navigation information (N).

2. Device (1) according to Claim 1, wherein the data processing unit (3) is designed to ascertain the check as to whether the optimization criterion can be met by waiting at the at least one parking space position ($P_i$) in consideration of

costs which result from a first availability model, which depicts the chronological development of the availability ($p_{\pi i}$) of parking spaces at the at least one parking space position ($P_i$).

3. Device according to Claim 2, wherein the first availability model, which is preferably based on an exponential distribution, relates an availability rate ($\mu$), according to which parking spaces become available at a parking space position (Pi), to a waiting time at the at least one parking space position ($P_i$).

4. Device (1) according to Claim 2 or 3, wherein the data processing unit (3) is designed to influence the costs resulting from the first availability model by specifying a probability ($p_{acc}$), with which a parking space will become available by waiting at the at least one parking space position ($P_i$).

5. Device (1) according to any one of the preceding claims, wherein the data processing unit (3) is designed to ascertain the check as to whether the optimization criterion can be met by returning to a parking space position ($P_i$) to be approached chronologically before the at least one parking space position ($P_i$) in consideration of a conditional availability of parking spaces at the parking space position ($P_i$) to be approached chronologically before the at least one parking space position ($P_i$), which results from a second availability model, which depicts the chronological development of the availability ($p_{\pi i}$) of parking spaces at the parking space positions ($P_i$) to be approached chronologically before the at least one parking space position (Pi).

6. Device (1) according to Claim 5, wherein the second availability model, which is preferably based on a Markov chain, relates a parking rate ($\lambda$), according to which parking spaces are occupied at a parking space position, to an availability rate ($\mu$), according to which parking spaces become available at a parking space position (Pi).

7. Vehicle, in particular motor vehicle, having a device (1) according to any one of the preceding claims.

8. Method for navigation of a vehicle having the following steps:

- providing position data (L), which contain information with respect to the present position ($P_0$) of the vehicle;
- providing destination data (Z), which contain information with respect to the position (F) of the destination being travelled towards by the vehicle;
- providing parking data (P), which contain information with respect to at least two parking space positions ($P_i$) and the availability of parking spaces at the at least two parking space positions ($P_i$);
- ascertaining a sequence, in which at least a part of the at least two parking space positions ($P_i$) is to be approached on the basis of the provided position data (L), destination data (Z), and parking data (P) in such a way that the ascertained sequence meets an optimization criterion, **characterized in that** it is checked for at least one of the parking space positions ($P_i$) whether the optimization criterion is met by waiting at the at least one parking space position ($P_i$) or returning to a parking space position ($P_i$) to be approached chronologically before the at least one parking space position ($P_i$); and
- outputting the ascertained sequence as navigation information (N).

## Revendications

1. Arrangement (1) destiné à délivrer des informations de navigation (N) pour un véhicule, comprenant

- au moins une interface d'entrée (2a, 2b, 2c) par le biais de laquelle peuvent être fournies des données de position (L), lesquelles contiennent des informations à propos de la position actuelle ($P_0$) du véhicule, des données de cible (Z), lesquelles contiennent des informations à propos de la position (F) de la cible commandée par le véhicule, et des données de stationnement (P), lesquelles contiennent des informations à propos d'au moins deux positions de place de stationnement ($P_i$) et de la disponibilité ($p_{\pi i}$) de places de stationnement au niveau des au moins deux positions de place de stationnement (Pi),
- un dispositif de traitement de données (3), lequel est conçu pour déterminer une séquence, dans laquelle il faut se déplacer jusqu'au moins une partie des au moins deux positions de place de stationnement ($P_i$) en se basant sur les données de position (L), les données de cible (Z) et les données de stationnement (P) fournies, de telle sorte que la séquence déterminée satisfait un critère d'optimisation,
**caractérisé en ce que**
le dispositif de traitement de données est conçu pour vérifier pour au moins l'une des positions de place de stationnement ($P_i$), lors de la détermination de la séquence, si le critère d'optimisation peut être satisfait en attendant au niveau de l'au moins une position de place de stationnement ($P_i$) ou en retournant à une position de place de stationnement ($P_i$) vers laquelle se déplacer chronologiquement avant l'au moins une position de place de stationnement (Pi), et

- au moins une interface de sortie (4), par le biais de laquelle la séquence déterminée peut être émise sous la forme d'informations de navigation (N).

2. Arrangement (1) selon la revendication 1, le dispositif de traitement de données (3) étant conçu pour déterminer la vérification si le critère d'optimisation peut être satisfait en attendant au niveau de l'au moins une position de place de stationnement ($P_i$) en tenant compte de coûts qui résultent d'un premier modèle de disponibilité, lequel représente le développement dans le temps de la disponibilité ($p_{\pi i}$) de places de stationnement au niveau de l'au moins une position de place de stationnement ($P_i$).

3. Arrangement selon la revendication 2, le premier modèle de disponibilité, lequel se base de préférence sur une distribution exponentielle, mettant en relation un taux de disponibilité ($\mu$), selon lequel les places de stationnement deviennent disponibles au niveau d'une position de place de stationnement ($P_i$), avec un temps d'attente au niveau de l'au moins une position de place de stationnement ($P_i$).

4. Arrangement (1) selon la revendication 2 ou 3, le dispositif de traitement de données (3) étant conçu pour influencer les coûts résultant du premier modèle de disponibilité en prédéfinissant une probabilité ($p_{acc}$) selon laquelle une place de stationnement devient disponible en attendant au niveau de l'au moins une position de place de station-nement ($P_i$).

5. Arrangement (1) selon l'une des revendications précédentes, le dispositif de traitement de données (3) étant conçu pour déterminer la vérification si le critère d'optimisation peut être satisfait en retournant à une position de place de stationnement ($P_i$) vers laquelle se déplacer chronologiquement avant l'au moins une position de place de station-nement ($P_i$) en tenant compte d'une disponibilité conditionnelle de places de stationnement au niveau de la position de place de stationnement ($P_i$) vers laquelle se déplacer chronologiquement avant l'au moins une position de place de stationnement ($P_i$), laquelle résulte d'un deuxième modèle de disponibilité qui représente le développement dans le temps de la disponibilité ($p_{\pi i}$) de places de stationnement au niveau de l'au moins une position de place de stationnement ($P_i$) vers laquelle se déplacer chronologiquement avant l'au moins une position de place de station-nement ($P_i$).

6. Arrangement (1) selon la revendication 5, le deuxième modèle de disponibilité, lequel se base de préférence sur une chaîne de Markov, mettant en relation un taux de stationnement ($\lambda$), selon lequel les places de stationnement sont occupées au niveau d'une position de place de stationnement, avec un taux de disponibilité ($\mu$), selon lequel les places de stationnement deviennent disponibles au niveau d'une position de place de stationnement ($P_i$).

7. Véhicule, notamment véhicule automobile, comprenant un arrangement (1) selon l'une des revendications précédentes.

8. Procédé de navigation d'un véhicule, comprenant les étapes suivantes :

- fourniture de données de position (L), lesquelles contiennent des informations à propos de la position actuelle ($P_0$) du véhicule ;
- fourniture de données de cible (Z), lesquelles contiennent des informations à propos de la position (F) de la cible commandée par le véhicule ;
- fourniture de données de stationnement (P), lesquelles contiennent des informations à propos d'au moins deux positions de place de stationnement ($P_i$) et de la disponibilité ($P_i$) de places de stationnement au niveau des au moins deux positions de place de stationnement ($P_i$) ;
- détermination d'une séquence, dans laquelle il faut se déplacer jusqu'au moins une partie des au moins deux positions de place de stationnement ($P_i$) en se basant sur les données de position (L), les données de cible (Z) et les données de stationnement (P) fournies, de telle sorte que la séquence déterminée satisfait un critère d'optimisation,
**caractérisé en ce que**
pour au moins l'une des positions de place de stationnement ($P_i$), le procédé comprend la vérification si le critère d'optimisation est satisfait en attendant au niveau de l'au moins une position de place de stationnement ($P_i$) ou en retournant à une position de place de stationnement ($P_i$) vers laquelle se déplacer chronologiquement avant l'au moins une position de place de stationnement ($P_i$) ; et

- émission de la séquence déterminée sous la forme d'informations de navigation (N).

Fig. 1

Fig. 3

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012161984 A
- EP 2587220 A
- DE 202016003680 U
- DE 102015225893
- DE 102015111218